Europäisches Patentamt

European Patent Office

Office européen des brevets

(11) Publication number: **0 065 096**
**B1**

(12) # EUROPEAN PATENT SPECIFICATION

(45) Date of publication of patent specification: **11.12.85**

(51) Int. Cl.⁴: **G 02 B 6/24**

(21) Application number: **82102571.5**

(22) Date of filing: **26.03.82**

(54) **Optical fiber splice and method for joining fibers.**

(30) Priority: **15.05.81 US 263902**

(43) Date of publication of application:
**24.11.82 Bulletin 82/47**

(45) Publication of the grant of the patent:
**11.12.85 Bulletin 85/50**

(84) Designated Contracting States:
**DE FR GB**

(56) References cited:
**DE-A-2 733 167**
**DE-B-2 525 132**
**US-A-3 768 146**
**US-A-4 057 448**
**US-A-4 205 898**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Esposito, John J.**
**209 B Rutgers Road**
**Piscataway New Jersey 08854 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

EP 0 065 096 B1

## Description

Field of the Invention

The present invention relates to a method and apparatus for securing the ends of a pair of optical waveguide fibers in optical alignment.

Background of the Invention

It is known that thin light-transmitting fibers formed of glass, plastic or the like, have certain inherent advantages over metallic conductors for transmission of signals in the telecommunications industry. Because of the great bandwidth which such fibers possess, a single fiber can transmit information at a higher rate than a metallic conductor many times its size, with consequent savings in material and installation costs.

Also because of their nature, however, the use of such fibers presents certain practical problems which are not present in systems employing metallic conductors. In forming a splice between two metallic conductors the main problem is one of assuring electrical continuity, and the physical orientation of the ends of the conductors is usually immaterial. On the other hand, in forming a splice between two optical fibers, the ends of the fibers must be brought into precise axial and angular alignment in order to avoid unacceptably high loss of light transmission from one fiber to the other. The problem of obtaining the necessary degree of precision in aligning optical fibers is complicated by the fact that the fibers are very small, typically having a diameter on the order of 0.0127 centimeters, and fragile in nature. In practice, the problems encountered in joining such fibers are further complicated by the fact that the splice must be made in the field by service or installation personnel without the aid of intricate or complex equipment. Further, in order to make a system based on such fibers economically feasible on a wide scale, any connector used in splicing optical fibers must be inexpensive and easy to manufacture.

Several connectors intended for splicing optical fibers are known. In some of these devices, e.g., those shown in U.S. Patents 3,768,146, issued October 30, 1973, Frank A. Braun, et al; 4,057,448, issued November 8, 1977, Calvin M. Miller; and 4,077,702, issued March 7, 1978, Dieter Kunze, et al, the ends of the fibers to be spliced are inserted into a connector such as a sleeve, designed to bring the ends into proper alignment, and the splice is completed by cementing the ends of the fibers or crimping the connector. In another technique, as shown in U.S. Patents 3,912,574, issued October 14, 1975, Allen H. Cherin, et al; 3,984,172, issued October 5, 1976, Clavin M. Miller; and 4,029,390, issued June 14, 1977, Edwin L. Chinnock, et al, the ends of the connectors are placed in precisely dimensioned V-shaped or circular grooves designed to bring the fibers into axial alignment, and a cover plate or the like is affixed to hold the fibers in position. While these devices have met with varying degrees of success, they still have certain practical shortcomings. Those employing sleeves present problems in inserting the fine fiber into the connecting sleeve, while those employing grooves require precise dimensions and careful attention to insure that no misalignment occurs when the cover plate is affixed. In addition, those that depend on cement for securing the connection require that the splice remain undisturbed while the cement cures. US—A—4 205 898 discloses an arrangement which also depends on aligning the fiber ends in a V-shaped groove, and uses resilient tab means to thrust the ends into the groove. This technique does not, however, join the fiber ends themselves but requires that they first be provided with ferrules which are then aligned in the groove.

U.S. Patent 4,123,138, issued October 31, 1978, Robert J. Morrison, discloses a connector employing a deformable base having therein a hole precisely conforming to the diameter of the fibers to be joined. By bending the base along a longitudinal axis parallel to the hole, the hole is deformed sufficiently to permit the insertion, into opposite ends of the hole, of the ends of the fibers to be spliced, whereupon the base is permitted to return to its normal undeformed condition. Despite the enlargement of the hole which may occur on deformation of the base, the connector still presents the problem of inserting a fine fiber into a small hole and assuring that the ends of the fibers are properly adjacent.

Summary of the Invention

In accordance with the broadest aspects of the invention, there are provided a method in accordance with claim 9, and a connector in accordance with claim 1. The invention may thus be used in making accurately aligned and reliable splices between the ends of a pair of optical fibers.

In a preferred embodiment of the connector of the invention, the groove is formed in a generally rectangular sheet of deformable material, suitably of substantially uniform thickness, the groove itself acting as a score line creating a fold axis about which the base can be folded in a direction tending to narrow the opening at the top of the groove. The connector also includes clamp means for maintaining the base in its deformed condition with the fiber ends within the groove and the base folded sufficiently to cause the sidewalls of the groove to exert compressive forces on the sides of the fibers. In one specific embodiment, the clamp means engages two opposite edges of the base parallel to and substantially equidistant from the groove. In another embodiment, the base is provided with a pair of upstanding ribs located on either side of and parallel to the groove, and the clamp comprises a hollow member having a longitudinal slot into which the deformed base is inserted with the upstanding ribs in contact with the edges of the slot.

At least the preferred method of the invention involves placing the ends of the fibers in a generally U-shaped groove formed in a resilient base means which is deformable along a fold axis running longitudinally of the groove. With the fiber ends in adjacent or abutting relationship in the groove, the base is deformed along the fold axis in a direction to narrow the width of the entrance to the groove, thereby causing the walls of the groove to exert a force on the fibers which not only secures the ends of the fibers in the connector but also automatically centers the ends thereof both angularly and axially. Further, because the method produces inward deformation of the sides of the groove, the width of the undeformed groove can be made substantially larger than the diameter of the fibers, thereby facilitating installation of the fiber ends within the groove.

The invention will be better understood from the following detailed description of exemplary embodiments thereof taken in conjunction with the accompanying drawings.

Brief Description of the Drawings

In the drawings, like numerals are used to identify the same elements in the several figures, in which:

FIGURE 1 is a perspective view of a typical base forming a part of the connector of the invention, with the ends of a pair of fibers in adjacent relationship in a groove in the base, prior to deformation of the base;

FIGURE 2 is a perspective view of a finished splice using the connector of the invention, showing a clamp holding the base of Figure 1 in a deformed condition, a portion of the clamp being torn away to show the interior of the connector;

FIGURE 3 is an enlarged partial section along the line 3—3 of Figure 1, showing the fiber ends in position in the groove before deformation of the base;

FIGURE 4 is an enlarged partial section along the line 4—4 of Figure 2, showing the base in a deformed condition, with the sides of the groove exerting a centering force on the fiber ends;

FIGURE 5 is a perspective view of an alternative embodiment of a base used in the invention, having two upstanding ribs parallel to and on opposite sides of the groove in which two fiber ends have been inserted, a portion of one of the ribs being torn away;

FIGURE 6 is a perspective view of a clamp suitable for holding the base of Figure 5 in a deformed condition;

FIGURE 7 is an enlarged partial section along the line 7—7 of Figure 5 showing the fiber ends in position in the undeformed base; and

FIGURE 8 is an elevational view of the base of Figure 5 and the clamp of Figure 6 in an assembled condition.

Detailed Description of the Invention

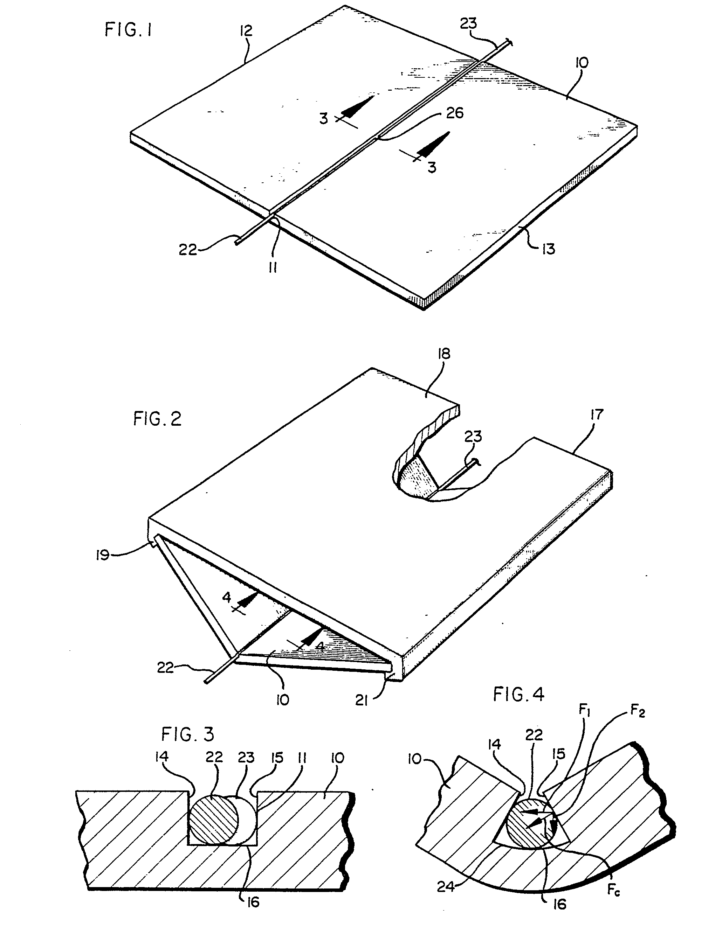

As shown in Figures 1 and 2, in one embodiment the connector of the invention employs a generally planar rectangular base 10 formed of an appropriately resilient material, the base having a groove 11 which extends across the base in a direction generally parallel to and spaced from two opposite edges 12 and 13 of the base. As shown in Figure 3, groove 11 is suitably rectangular or generally U-shaped in cross-section, having a pair of opposed, generally parallel sidewalls 14 and 15 interconnected by bottom wall 16, the upper edges of the sidewalls defining an entrance to the groove. The dimensions of the groove and fibers shown in the Figures are not to scale, being enlarged to facilitate illustration. In a preferred embodiment, base 10 has a substantially uniform thickness, i.e., the upper and lower surfaces thereof are defined by generally parallel planes. Accordingly, groove 11 reduces the thickness of base 10 and creates a fold line or axis extending longitudinally of the groove, about which base 10 can be folded to assume the inverted V-shaped configuration shown in Figure 2. It should be understood, however, that base 10 need not have a uniform thickness, provided that it can be folded or otherwise deformed along the length of groove 11 to cause the sidewalls of the groove to provide the desired clamping and centering forces on the fibers, discussed below.

Also shown in Figure 2 is a clamp 17 comprising a suitably dimensioned rectangular plate 18, to opposite edges of which are affixed a pair of depending inwardly opening channels 19 and 21 which engage the edges 12 and 13 of base 10 and maintain the base in the deformed condition shown in Figure 2.

In forming a splice using the connector of the invention, the ends of two optical fibers 22 and 23 to be joined are placed in abutting or adjacent relationship in approximately the middle of groove 11, the exact location of the ends of the fibers in the groove being immaterial. Opposed edges 12, 13 of base 10 are then folded about the groove as an axis in a direction to narrow the entrance of the groove and to clamp the fibers therein, as shown in Figure 4. Clamp 17 is then assembled over the deformed base with edges 12, 13 of the base engaging channels 19, 21 of the clamp. By making base 10 of an elastically deformable sheet material having a tendency to return to its normal planar state, edges 12, 13 of base 10 will exert a force against channels 19, 21 sufficient to maintain the integrity of the structure. If it is desired for any reason to disassemble the joint, clamp 17 can be easily moved to disengage channels 19, 21 from the edges of base 10, thereby permitting base 10 to be flattened sufficiently to permit removal of the fiber ends.

It will be seen in Figures 3 and 4, that the normal undeformed width, i.e., the distance between walls 14 and 15, of groove 11 is greater than the diameter of fibers 22 and 23, thereby facilitating the insertion of the fibers into the groove. When base 10 is folded or deformed, however, opposite sidewalls 14, 15 of the groove are inclined towards each other sufficiently to come into contact with and to exert a compressive force on the fibers. As shown in Figure 4, the radial force $F_c$ exerted on the fibers by contact with each sidewall of the groove can be resolved into a horizontal component $F_1$ which tends to center each fiber laterally within the groove and a downwardly directed vertical component $F_2$ which forces the fiber into contact with bottom wall 16 of the groove. Thus, although the fibers are not aligned when originally inserted in undeformed groove 11, as shown in Figure 3, deformation of base 10 not only brings the fibers into axial alignment but also grips them with sufficient force to provide a strain relief and to prevent accidental displacement during normal handling. As will be evident to those skilled in the art, however, the gripping and aligning forces should not be sufficient to deform the fibers to the extent that the light transmitting ability thereof is adversely affected.

During assembly of the connector of the invention, an index matching cement can be applied to joint 26 between fibers 22 and 23, if a non-detachable joint is desired. In any event, it will be seen that the assembly can be completed immediately after application of the cement without waiting for the cement to harden or cure, since the ends of the fibers are maintained by the connector in properly aligned condition during such hardening or curing.

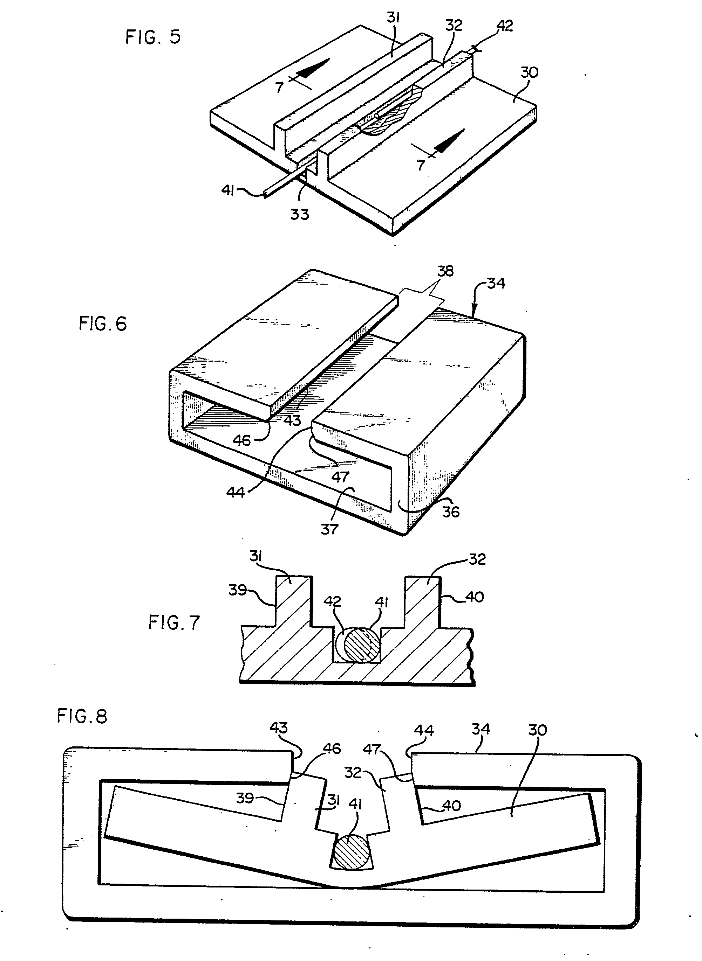

In another embodiment of the invention, which differs from that previously described principally in the means used to maintain the base in a deformed or V-shape, base 30 (Figure 5) is provided with a pair of upstanding ribs 31 and 32 parallel to and positioned on opposite sides of groove 33. Clamp 34 (Figure 6) is used with base 30 and comprises a tubular or box-like member 36 having open ends 37 and a longitudinally extending slot 28 having a width which is less than the distance between outer faces 39 and 40 of upstanding ribs 31 and 32. For assembly of the elements shown in Figures 5 and 6, after insertion of fibers 41 and 42 into groove 33, base 30 is folded along groove 33 to a V-shape as shown in Figure 8 and inserted into open end 37 of clamp 34 with upstanding ribs 31 and 32 in contact with edges 43 and 44 of slot 37, the lower portions 46 and 47 of which may be chamfered as shown to provide an appropriate bearing surface for maintaining the base 30 in a deformed condition. In all other respects, the connector shown in Figures 5—8 and the manner of its use corresponds with those of the embodiment of Figure 2.

The groove, e.g., 11 or 33, used in the connector of the invention preferably has a width which is 1.0—1.5 times the depth thereof. A groove so dimensioned can be used to splice a variety of different fiber sizes without adjustment, and thus reduces the number of different sizes of connectors which must be stocked for making splices. Further, since in general the fibers which can be spliced with a given connector have diameters which are substantially smaller than the width of the groove, insertion of the fibers into the groove is easily accomplished in the field without the necessity for using auxiliary equipment such as magnifiers or microscopes.

The foregoing detailed description has been given for clearness of understanding only, and no unnecessary limitations should be understood therefrom as modifications will be obvious to those skilled in the art.

## Claims

1. A connector for securing the ends of a pair of optical fibers (22, 23; 41, 42) in optical alignment in a groove (11; 33) and including resilient means (10; 30) characterized by said groove being provided in said resilient means, said groove loosely receiving the ends of said optical fibers in unaligned relation between opposed sidewalls (14; 15); and means (17; 34) for deforming said resilient means to move said walls into compressive engagement with said optical fibers, said walls moving the ends of said optical fibers into optical alignment and securing said optical fibers in said groove.

2. A connector in accordance with claim 1, wherein said walls (14; 15) are arranged to engage said optical fibers (22, 23; 41, 42) when said resilient means is deformed such that they exert on said fibers compressive forces $(F_c)$ having first opposing force components $(F_1)$ for centering said optical fibers in said groove (11; 33) and second cooperating force components $(F_2)$ for bottoming said optical fibers in said groove.

3. A connector in accordance with claim 1 or 2 wherein said groove (11; 33) has a generally U-shaped cross-sectional configuration defined by said sidewalls (14; 15) and a bottom wall (16) extending therebetween, said sidewalls defining an entrance to said groove.

4. A connector in accordance with any preceding claim wherein the sidewalls (14; 15) of said groove (11; 33) are substantially parallel, and wherein said groove is formed in a base (10; 30), said base (10; 30) being deformable about a fold axis extending longitudinally of said groove, and said means for deforming said base comprising a clamp (17; 34).

5. A connector in accordance with claim 4 wherein said base (10; 30) is elastically deformable along the length of said groove (11; 33).

6. A connector in accordance with claim 4 or 5 wherein said base (30) is generally rectangular in outline and is provided with a pair of generally parallel upstanding ribs (31, 32) situated on opposite sides of and generally parallel to said groove (33), and said clamp (34) exerts a force on said ribs, causing said base to deform along said fold axis.

7. A connector in accordance with claim 6 wherein said clamp (34) has a box-like construction with open opposing ends permitting the insertion therein of said base (30); said clamp having a longitudinally extending slot (37) with opposed edges (43, 44) adapted to engage said upstanding ribs and to exert said deforming force thereon.

8. A connector in accordance with any preceding claim wherein the width of said groove (11; 33) is 1.0—1.5 times the depth thereof.

9. A method for joining a pair of optical waveguide fibers (22, 23; 41, 42) comprising:

providing a base (10; 30) having a groove (11; 33) adapted to receive said fibers between

a pair of sidewalls (14, 15), characterized by said base being deformable about a fold axis extending longitudinally of said groove,

placing an end of each of said fibers in adjacent relationship in said groove, and

folding said base about said axis to cause said sidewalls to exert a clamping force on said ends which aligns and secures them in aligned relationship.

10. A method in accordance with claim 9 including the additional step of applying an index matching adhesive to said adjacent ends to provide a permanent joint.

**Revendications**

1. Connecteur pour fixer les extrémités d'une paire de fibres optiques (22, 23; 41, 42) en alignement optique dans une rainure (11; 33) et comprenant des moyens élastiques (10; 30), caractérisé en ce que la rainure est prévue dans les moyens élastiques, cette rainure recevant de façon lâche les extrémités des fibres optiques dans un état non aligné entre les parois latérales opposées (14; 15); et en ce qu'il comprend des moyens (17; 34) pour déformer les moyens élastiques pour déplacer les parois en contact presseur avec les fibres optiques, ces parois déplaçant les extrémités des fibres optiques en alignement optique et fixant les fibres optiques dans la rainure.

2. Connecteur selon la revendication 1, caractérisé en ce que les parois (14; 15) sont disposées pour entrer en contact avec les fibres optiques (22, 23; 41, 42) quand le moyen élastique est déformé de sorte qu'elles exercent sur les fibres des forces de compression (Fc) ayant des premières composantes opposées (F1) pour centrer les fibres optiques dans la rainure (11; 33) et des secondes composantes (F2) coopérant pour abaisser les fibres optiques dans le fond de la rainure.

3. Connecteur selon l'une des revendications 1 ou 2, caractérisé en ce que la rainure (11; 33) a, en coupe, une forme générale en U définie par les parois latérales (14; 15) et une paroi de fond (16) s'étendant entre elles, ces parois latérales définissant une ouverture vers la rainure.

4. Connecteur selon l'une quelconque des revendications 1 à 3, caractérisé en ce que les parois latérales (14; 15) de la rainure (11; 33) sont sensiblement parallèles, et en ce que la rainure est formée dans un support (10; 30),

le support (10; 30) étant déformé autour d'un axe de pliage s'étendant selon la longueur de la rainure, et

les moyens pour déformer le support comprenant un moyen de blocage (17; 34).

5. Connecteur selon la revendication 4, caractérisé en ce que le support (10; 30) est élastiquement déformable selon la longueur de la rainure (11; 33).

6. Connecteur selon l'une des revendications 4 ou 5, caractérisé en ce que le support (30) est de façon générale rectangulaire et est muni d'une paire de nervures s'étendant vers le haut, de façon générale parallèles (31, 32), situées sur les côtés opposés de la rainure (33) et de façon générale parallèles à celle-ci, et en ce que le moyen de blocage (34) exerce une force sur ces nervures, amenant le support à se déformer selon l'axe de pliage.

7. Connecteur selon la revendication 6, caractérisé en ce que le moyen de blocage (34) a une construction en forme de boîte avec des extrémités opposées ouvertes permettant l'insertion dans celui-ci du support (30), ce moyen de blocage ayant une fente s'étendant longitudinalement (38) avec des bords opposées (43, 44) adaptés à s'engager avec les nervures dirigées vers le haut pour exercer ladite force de déformation.

8. Connecteur selon l'une quelconque des revendications 1 à 7, caractérisé en ce que la largeur de la rainure (11; 33) est de 1 à 1,5 fois sa profondeur.

9. Procédé de connexion d'une paire de fibres de guide d'onde optique (22, 23; 41, 42), consistant à:

prévoir un support (10; 30) muni d'une rainure (11; 33) adaptée à recevoir les fibres entre une paire de parois latérales (14, 15),

caractérisé en ce que ce support est déformable selon un axe de pliage s'étendant selon la longueur de la rainure, et en ce qu'il comprend en outre les étapes suivantes:

placer une extrémité de chacune des fibres en relation adjacente dans la rainure, et

plier le support autour de cet axe pour amener les parois latérales à exercer une force de blocage sur les extrémités, ce qui les aligne et les fixe en relation d'alignement.

10. Procédé selon la revendication 9, caractérisé en ce qu'il comprend l'étape supplémentaire consistant à appliquer un adhésif d'adaptation d'indice aux extrémités adjacentes pour fournir une jonction permanente.

**Patentansprüche**

1. Ein Verbinder zur Befestigung der Enden eines Paars von optischen Fasern (22, 23; 41, 42) in optischer Ausrichtung in einer Nut (11; 33) und einschließlich elastischer Mittel (10; 30),

dadurch gekennzeichnet, daß die Nut in den elastischen Mitteln vorgesehen ist, wobei die Nut die Enden der optischen Fasern locker in nicht ausgerichteter Beziehung zwischen den Entgegengesetzten Seitenwänden (14; 15) aufnimmt und daß Mittel (17; 34) vorgesehen sind, um die elastischen Mittel zu deformieren, um die Wände in Druckeingriff mit den optischen Fasern zu bringen, wobei die Wände die Enden der optischen Fasern in optischer Ausrichtung bringen und die optischen Fasern in der Nut befestigen.

2. Verbinder nach Anspruch 1, wobei die Wände (14; 15) derart angeordnet sind, daß sie mit den optischen Fasern (22, 23; 41, 42) in Eingriff kommen, wenn die elastischen Mittel deformiert sind, derart, daß sie auf die Fasern Druckkräft ($F_c$) ausüben, mit ersten entgegengesetzten Kraftkomponenten ($F_1$) zur Zentrierung der optischen Fasern in der Nut (11; 33) und zweiten zusammenarbeitenden Kraftkomponenten ($F_2$), um die optischen Fasern in der Nut am Boden anzubringen.

3. Verbinder nach Anspruch 1 oder 2, wobei die Nut (11; 33) eine im ganzen U-förmige Querschnittsform bestizt, und zwar definiert durch die Seitenwände (14; 15) und ein Bodenwand (16), die sich dazwischen erstreckt, wobei die Seitenwände einen Eingang zur Nut definieren.

4. Verbinder nach irgendeinem vorhergehenden Anspruch, wobei die Seitenwände (14; 15) der Nut (11; 33) im wesentlichen parallel verlaufen, wobei die Nut in einer Basis (10; 30) ausgebildet ist, wobei die Basis (10; 30) um eine sich längs der Nut erstreckende Faltachse deformierbar ist, wobei die Mittel zur Deformierung der Basis eine Klammer (17; 34) aufweisen.

5. Verbinder nach Anspruch 4, wobei die Basis (10; 30) elastisch entlang der Länge der Nut (11; 33) deformierbar ist.

6. Verbinder nach Anspruch 4 oder 5, wobei die Basis (30) im Umriß im ganzen rechteckig ist und mit einem Paar von im ganzen parallelen hochstehenden Rippen (31, 32) ausgestattet ist, die auf entgegengesetzten Seiten der Nut und im ganzen parallel zur Nut (33) angeordnet sind, und wobei die Klammer (34) eine Kraft auf die Rippen ausübt, welche eine Deformation längs der Faltachse bewirkt.

7. Verbinder nach Anspruch 6, wobei die Klammer (34) eine kastenartige Konstruktion aufweist, und zwar mit offenen, entgegengesetzt liegenden Enden, die das Einsetzen der Basis (30) darinnen gestatten, und wobei die Klammer einen sich in Längsrichtung erstreckenden Schlitz (37) aufweist, und zwar mit entgegengesetzt liegenden Kanten (43, 44) geeignet zum Eingriff der hochstehenden Rippen und zur Ausübung der Deformationskraft darauf.

8. Verbinder nach irgendeinem vorhergehenden Anspruch, wobei die Breite der Nut (11; 33) das 1,0 bis 1,5-fache der Tiefe derselben ist.

9. Verfahren zur Verbindung eines Paars von optischen Wellenleiterfasern (22, 23; 41, 42), wobei folgendes vorgesehen ist:

Vorsehen einer Basis (10; 30) mit einer Nut (11, 33) geeignet zur Aufnahme der Faser zwischen einem Paar von Seitenwänden (14, 15), dadurch gekennzeichnet, daß die Basis um eine Faltachse deformierbar ist, die sich in Längsrichtung der Nut erstreckt, wobei ferner ein Ende jeder der Fasern in benachbarter Beziehung in der Nut angeordnet ist, und wobei schließlich die Basis um die Achse herumgefaltet wird, um zu bewirken, daß die Seitenwände eine Klemmkraft auf die erwähnten Enden ausübt, welche die Enden ausrichtet und in ausgerichteter Beziehung befestigt.

10. Verfahren nach Anspruch 9 mit dem zusätzlichen Schritt des Aufbringens eines Indexanpassenden Klebemittels an die benachbarten Enden zum Vorsehen einer permanenten Verbindung.

0 065 096

FIG. 1

FIG. 2

FIG. 3

FIG. 4

1

FIG. 5

31  32  42

7

30

41

33

7

FIG.6

38  34

43  46

44

47

37

36

FIG. 7

31  32

39  42  41  40

FIG.8

43  46  47  44  34  30

39  31  41  32  40